**Europäisches Patentamt**

**European Patent Office**

**Office européen des brevets**

(19)

(11) Veröffentlichungsnummer: **0 046 725**
**A1**

(12) **EUROPÄISCHE PATENTANMELDUNG**

(21) Anmeldenummer: **81730079.1**

(22) Anmeldetag: **24.08.81**

(51) Int. Cl.³: **F 24 J 3/02**
**E 02 D 5/72, E 02 D 5/52**
**E 02 D 7/08**

(30) Priorität: **22.08.80 DE 3032110**
**22.08.80 DE 3032108**

(43) Veröffentlichungstag der Anmeldung:
**03.03.82 Patentblatt 82/9**

(84) Benannte Vertragsstaaten:
**BE IT**

(71) Anmelder: **Hampe, Andreas, Dr.-Ing.**
**Lotzestrasse 7**
**D-1000 Berlin 45(DE)**

(72) Erfinder: **Hampe, Andreas, Dr.-Ing.**
**Lotzestrasse 7**
**D-1000 Berlin 45(DE)**

(74) Vertreter: **Christiansen, Henning, Dipl.-Ing.**
**Unter den Eichen 108a**
**D-1000 Berlin 45(DE)**

(54) **System zum Einrammen von Wärmetauscherelementen einer Erdwärmegewinnungsvorrichtung.**

(57) System zum vertikalen Einrammen von rohrförmigen, zur Aufnahme eines Wärmetransportmediums dienenden, Wärmetauscherelementen einer Erdwärmegewinnungsvorrichtung in das Erdreich, wobei die Wärmetauscherelemente (1) zum Einrammen in das Erdreich eine Spitze (2) aufweisen, deren Außendurchmesser (d) in ihrem hinteren Bereich vergrößert ist und den Außendurchmesser (d) der Wärmetauscherelemente (1) übertrifft, wobei das Übermaß des Durchmessers dem Relaxationsvermögen des jeweiligen Erdreichs derart angepaßt ist, daß der Erdanschluß wenige Stunden nach dem Rammvorgang erreicht wird sowie ein zugehöriges Arbeitsverfahren.

Fig.1

EP 0 046 725 A1

- 1 -

Dr.-Ing. Andreas Hampe
D-1000 Berlin 45

HP30.2-EU

System zum Einrammen von Wärmetauscherelementen einer
Erdwärmegewinnungsvorrichtung

Beschreibung

Die Erfindung betrifft ein System zum Einrammen von
rohrförmigen, zur Aufnahme eines Wärmetransportmediums
dienenden, Wärmetauscherelementen einer Erdwärmegewinnungsvorrichtung in das Erdreich sowie ein zugehöriges
Arbeitsverfahren.

/2

Obgleich mit vertikalen Wärmetauscherelementen arbeitende Erdwärmegewinnungssysteme gegenüber horizontal verlegten Wärmetauschern, die bekannterweise mäanderförmig in der Nähe der Oberfläche im Erdreich verlegte Rohrschlangen bilden, eine Anzahl von Vorteilen aufweisen, ist ihre Einsatzmöglichkeit derzeit beschränkt, da die zum Einbringen der Elemente in das Erdreich verwendeten Vorrichtungen aus der Brunnenbautechnik stammen. Derartige Baugeräte können nicht in angelegte Gärten von Ein- oder Zweifamilienhäusern gelangen, ohne daß relativ große Zerstörungen angerichtet werden. Dazu kommt, daß bei vielen derartigen Häusern gar keine Zufahrtsmöglichkeit zu der für die Aufnahme von Wärmetauscherelementen geeigneten Grundstücksfläche besteht. Damit kann ein mit vertikal angeordneten Wärmetauschern arbeitendes Erdwärmegewinnungssystem vielfach nicht zur Anwendung gelangen, obgleich es aufgrund seiner übrigen Betriebsvorteile vorzuziehen wäre.

Aus der DE-A1-29 12 770 ist es beispielsweise bekannt, Erdwärmegewinnungsgeräte mittels eines Rammbohrgerätes mit Nachziehrohr in das Erdreich einzubringen. Derartige Rammbohrgeräte gehören aber zu den vorgenannten sperrigen Baugeräten, welche nicht bei beengten Raumverhältnissen verwendbar sind.

Der Erfindung liegt die Aufgabe zugrunde, ein Erdwärmegewinnungssystem der obengenannten Gattung anzugeben, dessen Wärmetauscherelemente sich mit Geräten in das Erdreich einbringen lassen, welche eine geringe Baugröße aufweisen und insbesondere unabhängig von Fahrzeugen transportabel sind. Außerdem soll ein Arbeitsverfahren zur Anwendung mit dem vorgenannten System geschaffen werden, welches auf einfache Weise ermöglicht, den Wärmeübergang zwischen Erdreich und Wärmetauscherelementen so einzustellen, daß er einen optimalen Wirkungsgrad der Anlage bei während der gesamten Betriebszeit im wesentlichen konstanten Verhältnissen sicherstellt.

Diese Aufgabe wird erfindungsgemäß gelöst durch ein System der eingangs genannten Gattung, wobei die Wärmetauscherelemente zum Einrammen in das Erdreich eine Spitze aufweisen, deren Außendurchmesser (D) in ihrem hinteren Bereich vergrößert ist und den Außendurchmesser (d) der Wärmetauscherelemente übertrifft, wobei das Übermaß des Durchmessers dem Relaxationsvermögen des jeweiligen Erdreichs derart angepaßt ist, daß der Erdanschluß wenige Stunden nach dem Rammvorgang erreicht wird.

Die Erfindung beruht auf der Erkenntnis, daß eine unproblematischen Einbringung der Wärmetauscherelemente ins Erdreich nur dann möglich ist, wenn statt aufwendiger (Spül-) Bohrtechniken ein Rammverfahren verwendet wird, wobei die Rammvorrichtungen um so kleiner gestaltet sein können, je kleiner auch die Wärmetauscherelemente ausgebildet sind. Hier schien jedoch zunächst ein Widerspruch derart zu bestehen, daß die Oberfläche eines mit gutem Ergebnis arbeitenden Wärmetauscherelementes stets möglichst groß sein sollte, was nach Ansicht der Fachwelt bestimmte Mindestabmessungen erforderlich machte, die zu unterschreiten nur mit einem beträchtlichen Wirkungsverlust erkauft werden kann. Insbesondere auch die Erzielung eines ausreichenden Erdanschlusses bereitet bei kleineren

/4

Wärmetauscherdurchmessern - wie weiter unten noch ausgeführt - besondere Schwierigkeiten.

Auch die übrigen bei der Wärmetauschertechnik einzuhaltenden Randbedingungen sprachen bisher eher gegen eine Anwendung der Rammtechnik. So wird - insbesondere bei der Verwendung kleiner Rammkräfte - verlangt, daß die Reibung der
Elemente in bezug auf das Erdreich beim Eintreiben möglichst klein sein soll. Dem steht die Notwendigkeit eines
besonders guten Kontaktes zwischen Wärmetauscherelement
und Erdreich im Betiebszustand gegenüber, da durch diesen
Kontakt der Wärmeübergangswiderstand bestimmt wird. Erdwärmegewinnungssystem müssen eine gewisse Mindestlänge
aufweisen, damit die mit der vertikalen Anordnung verbundenen Vorteile, wie geringe direkte Klimabeeinflussung,
großes für die Wärmeenergiegewinnung nutzbare Erdvolumen
und die vergrößerte Wahrscheinlichkeit, Erdschichten von
oberflächennahem Grundwasser mit hoher Wärmeleitung und
Wärmekapazität zu erreichen, genutzt werden können, was
ebenfalls der Forderung nach kleinen Vorrichtungen zur
Einbringung der Wärmetauscher in das Erdreich zuwiderzulaufen scheint.

Bevorzugte Weiterbildungen, welche in den Unteransprüchen
angegeben und anhand der nachfolgend beschriebenen Ausführungsbeispiele näher dargestellt sind, haben daneben ein
Verbindersystem und Rammvorrichtungen in zwei Ausführungsformen sowie eine Meßanordnung zum Gegenstand, welche die
genannte Erdwärmegewinnungsanordnung zu einem System ergänzen, das geeignet ist, eine weite Verbreitung zu erfahren.

/5

Besonders vorteilhaft ist dabei, daß die Einbringung der Wärmetauscherelemente ohne Einschaltung von Spezialfirmen, wie beispielsweise solcher für die Brunnenbautechnik oder für Erdbauarbeiten, von denjenigen Handwerksbetrieben ausgeführt werden kann, welche auch für die Installation der übrigen Heizungsanlage verantwortlich sind. Eine Rammvorrichtung, wie sie hier beansprucht wird, kann in einer Baugröße hergestellt werden, die sich im Kofferraum eines normalen Personenkraftwagens unterbringen läßt.

Vorteilhafte Weiterbildungen der Erfindung sind in den Unteransprüchen gekennzeichnet bzw. werden bei der nachstehenden Darstellung einer bevorzugten Ausführung der Erfindung näher beschrieben. Es zeigen:

Figur 1 ein Ausführungsbeispiel der Spitze des erfindungsgemäßen rohrförmigen Wärmetauscherelementes,

Figur 2 den Bereich zweier aufeinanderfolgender Außenrohre des Wärmetauscherelementes gemäß Figur 1,

Figur 3 eine Rammvorrichtung für ein Wärmetauscherelement gemäß Figuren 1 und 2,

Figur 4 einen Klemmkegel für eine Rammvorrichtung gemäß Figur 3,

Figur 5 eine weitere Ausführungsform einer Rammvorrichtung für ein rohrförmiges Wärmetauscherelement,

Figur 6 eine Detaildarstellung des Antriebs für den Rammklotz der Rammvorrichtung gemäß Figur 5 sowie

/6

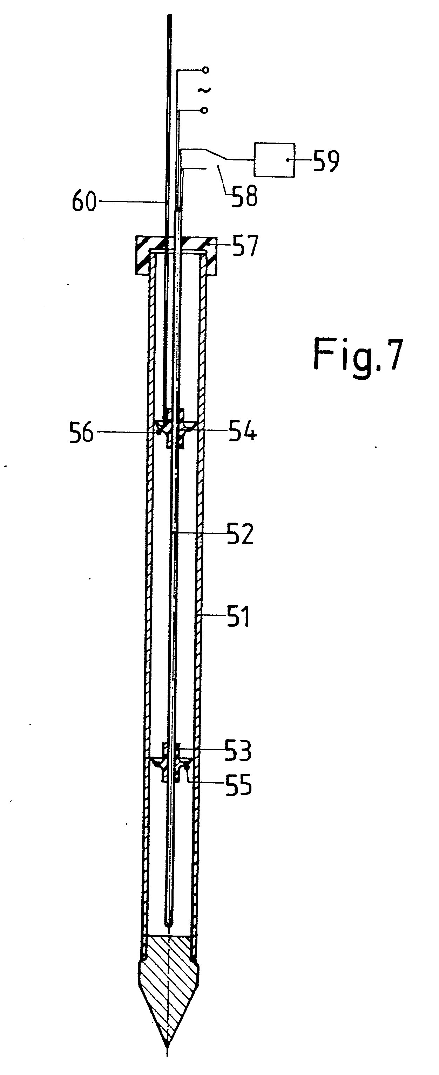

Figur 7    eine Meßanordnung im Rahmen des erfindungsgemäßen Systems.

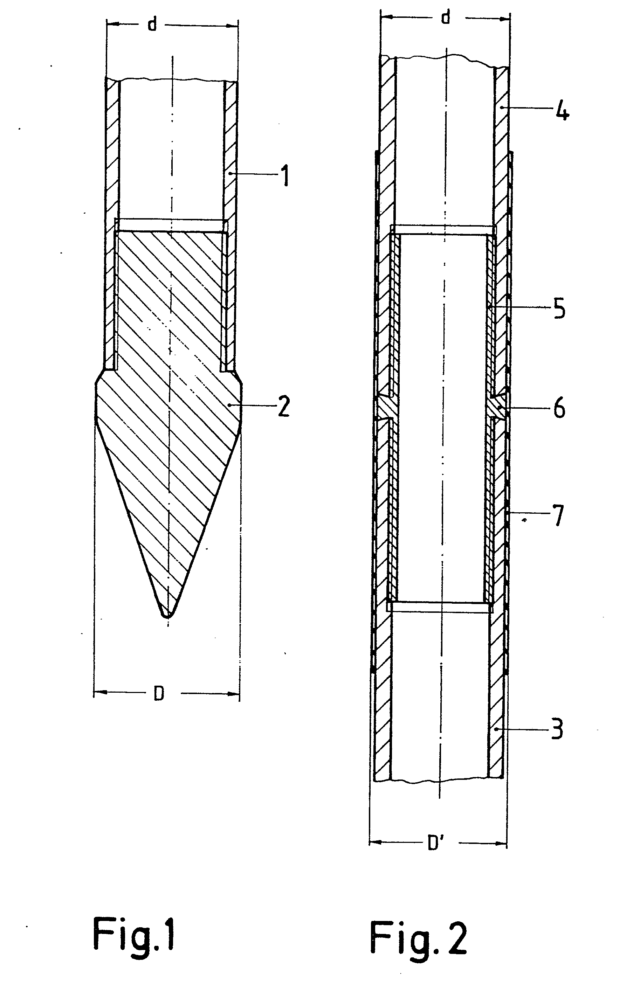

Bei der in Figur 1 dargestellten Spitze eines rohrförmigen
Erdwärmetauschers ist in dem Ende eines aus verzinktem
Eisen bestehenden Außenrohrs 1 eine Spitze 2 vorgesehen,
welche einen Durchmesser D aufweist, der den Außendurchmesser d des Außenrohrs geringfügig (bevorzugt um ca. 10%)
übertrifft. Die Spitze 2 ist in das Rohrende mittels eines
Gewindes eingeschraubt, welches entfallen kann, wenn die
Spitze mit dem Endrohr von vorn herein dauerhaft verbunden
ist oder aber an das Rohr angeformt ist. Das Übermaß des
Außendurchmessers der Spitze in bezug auf den Durchmesser
des Außenrohrs schafft den zum leichtgängigen Einrammen
des Rohrs durch ein verhältnismäßig kleines Rammgewicht
(ungefähr 20 kg bei einem Rohrdurchmesser von ca. 25 mm)
notwendigem Freiraum.

Da bei einem Wärmetauscherelement der Wärmekontakt des
Erdreichs mit dem Außenrohr eine besondere Rolle spielt
und sicher erreicht werden muß, bereitete die Wahl der
Durchmesserdifferenz D - d bisher beträchtliche Schwierigkeiten. Insbesondere führt ein zu groß gewähltes Übermaß D nicht nur zu Schwierigkeiten beim Rammen, sondern es
ist der Fall möglich, daß trotz verhältnismäßig leichtgängigem Einrammen selbst nach längerer Zeit kein zuverlässiger, einen guten Wärmekontakt sichernder Erdschluß erreicht wird. Hier könnte leicht aus der meßtechnischen
Erfassung eines einzelnen unzuverlässigen Wärmetauschers
auf die Notwendigkeit einer zu großen Zahl zur Erreichung
einer vorgegebenen Leistung notwendigen Anzahl von Elementen geschlossen werden, was zu einer unwirtschaftlichen Auslegung der Gesamtanlage führen würde.

Es wurde jedoch gefunden, daß, da das Relaxationsvermögen des Erdreichs einen exponentiellen Verlauf hat, und daher erwartet werden kann, daß bei richtiger Bemessung der Rammspitze der Erdschluß innerhalb einiger Stunden nach dem Einrammen des Elementes sicher eingetreten ist. Erdschluß bedeutet dabei, daß dem weiteren Einrammen des Wärmetauscherelementes mit einem 20 kg-Gewicht ein so großer Widerstand entgegengesetzt wird, daß praktisch kein weiteres Vorantreiben in das Erdreich möglich ist. Damit ist sichergestellt, daß spätestens innerhalb von 24 Stunden der Druck des umgebenden Erdreiches auf das Wärmetauscherelement so weit zugenommen hat, daß der Wärmetransport sich vom Endzustand kaum mehr merklich unterscheidet. Während der Bereich einiger Stunden also derjenige ist, in dem der exponentielle Verlauf der elastischen Rückformung des Erdreiches in einer entsprechenden graphischen Darstellung noch relativ steil verläuft, ist nach ungefähr einem Tag ein Bereich erreicht, in dem in der zugehörigen Darstellung die Funktion nur noch eine verhältnismäßig geringe Steigung aufweist und sich einer nahezu horizontalen Geraden deutlich asymptotisch angenähert hat.

Für verschiedene Bodenarten wird der Überdurchmesser D − d jeweils entsprechend den physikalischen Eigenschaften des Bodens ausgewählt. Das kann bei bekannter Bodenart durch Tabellen oder aber bei unbekannten Bodeneigenschaften nach einem probeweisen Einrammen eines Wärmetauscherelementes entsprechend dem anmeldungsgemäßen Arbeitsverfahren erfolgen, wobei die Spitzen bevorzugt so gestuft sind, daß die nächstgrößere Spitze das für den jeweiligen Boden richtige Übermaß aufweist, wenn ein mit der jeweils kleineren Spitze versehenes Element sich noch höchstens um eine vorbestimmte Länge einrammen läßt.

Bei dem anmeldungsgemäßen System wird von einer Meßanordnung gebrauch gemacht, welche mittels des sich nach Abschluß des Rammvorgangs einstellenden Wärmeübergangs Aufschluß über die zu verwendenden Spitzendurchmesserverhältnisse gibt. Es wird wie folgt vorgegangen:

Einrammen eines Rohres eines Wärmetauscherelementes mit einer Spitze, deren Außendurchmesser (D) in ihrem hinteren Bereich vergrößert ist und den Außendurchmesser (d) der Wärmetauscherelemente übertrifft, wobei das Übermaß des Durchmessers derart gewählt ist, daß sich das Rohr, so tief wie für die spätere Verwendung vorgesehen, in das Erdreich eintreiben läßt; Messung des Wärmeübergangs mittels der Meßanordnung; sowie Verkleinern des Verhältnisses des größeren Außendurchmessers (D) zu dem kleineren Außendurchmesser (d) der Spitze, falls sich nach einer Meßdauer von mehreren, bevorzugt 24, Stunden sich kein Wärmeübergang einstellt, welcher sich bei einem gleichartigen Wärmetauscherelement bei gutem Erdanschluß auch bei schlechten Bodenbedingungen mindestens einstellen sollte.

Hierbei wird die Tatsache ausgenutzt, daß sich nach einem Zeitraum anfänglich zunehmenden Wärmeübergangs, d.h. einem durch Aufheizung des Systems selbst und einiger Nebeneffekte zunächst gut erscheinenden Wärmeleitwert, erst nach dem genannten Zeitraum entscheiden läßt, ob ein auf Dauer wirksamer Erdanschluß erreicht wurde.

Nach Überschreiten des anfänglichen Maximums verschlechtert sich der Wärmeübergang wieder langsam, wobei sich ein quasi-stationärer Zustand einstellt. (Die mit der Zeit zunehmende Erschöpfung des das Wärmetauscherelement umgebenden Erdreichs wird dabei vernachlässigt, da es sich hierbei um einen Vorgang handelt, der sich über mehrere Monate erstreckt.)

In Figur 2 ist die Verbindungsstelle zweier aufeinanderfolgender ein Wärmetauscherelement bildender Außenrohre dargestellt, wobei zum erleichterten Rammen einzelne Rohrteile nacheinander in den Erdboden eingebracht und jeweils miteinander verbunden werden, wenn das vorangehende Rohrelement nahezu vollständig versenkt ist. Zum Verbinden der aufeinanderfolgenden Rohrteilelemente 3 und 4 dient eine Innenmuffe 5, welche in ihrem Mittelbereich einen die Bewegung der Rohrteilelemente beim Verbinden begrenzenden Flansch 6 enthält, dessen Außendurchmesser d der Rohrteilelemente entspricht, und im übrigen ein Außengewinde aufweist, welches dem Innengewinde an den Endbereichen der Rohrteilelemente 3 und 4 angepaßt ist. Der Innendurchmesser der Innenmuffe 5 ist so gewählt, daß ein koaxiales Innenrohr zum Zurückführen des Wärmetransportmediums mit für den Fluß des Mediums in entgegengesetzter Richtung genügendem Abstand einführbar ist. Die Stärke des Flansches 6 nimmt in radialer Richtung zu, um, bei entsprechend angepaßten Enden der Rohrteilelemente 3 und 4, zentrierend zu wirken.

Das Gewinde kann in den Fällen weggelassen werden, wenn auf ein späteres Wiederausziehen der Wärmetauscherelemente aus dem Erdreich verzichtet werden kann.

Die Verbindungsstelle zweier aufeinanderfolgender Rohrelemente 3 und 4 ist von einem Dichtungselement aus einem schrumpfenden PE- oder PVC-Schlauchmaterial versehen, der über die Rohrverbindung geschoben und dort erwärmt wird.

Mit einem derartigen Schrumpfschlauch ist es möglich, aufeinanderfolgende Rohrteilelemente schnell und dauerhaft abzudichten. Bei der erfindungsgemäßen Erdwärmegewinnungsvorrichtung bilden die Verbindungsstellen aufeinanderfolgender Rohrteilelemente 3 und 4 umgebenden Schrumpfschläuche 7 eine zusätzliche Führungsfunktion beim Einrammen der Elemente. Das Übermaß der Rammspitze 2 ist nämlich so bemessen, daß ein Einbringen auch längerer Wärmetauscherelemente mit einem kleinen Rammgewicht möglich ist. Da hierbei auch gewisse Rohrtoleranzen und geringere Rohrkrümmungen bzw. Krümmungen des Verlaufs der durch Rammen erzeugten Öffnung hingenommen werden müssen, besteht die Gefahr, daß - insbesondere bei längeren Wärmetauscherelementen - das in der Öffnung ein gewisses Spiel aufweisende Rohr bei Rammschlägen elastisch seitlich ausweicht. Dieses Ausweichen würde gerade die Wirkung eines kleines Rammgewichtes entscheidend vermindern und in einigen Fällen ein weiteres Eintreiben des Wärmetauscherelementes in das Erdreich unmöglich machen. Nun ist der Außendurchmesser D' der Schrumpfschläuche im auf das Außenrohr des Wärmetauscherelementes aufgeschrumpften Zustand aber so bemessen, daß es im wesentlichen gleich oder geringfügig kleiner ist als der Außendurchmesser D der ein Übermaß aufweisenden Rammspitze 2. Damit üben die die Verbindungsstellen aufeinanderfolgender Rohrelemente dichtenden Schrumpfschläuche 7 eine Führungsfunktion für das Rohr in der durch Rammen erzeugten Öffnung aus, welche wesentlich zur Erleichterung dieses Arbeitsvorgangs beiträgt. Ihre Wirkung wird noch dadurch unterstützt, daß sie - in den durch die Länge der einzelne Rohrabschnitte bildenden Teilelemente bestimmten Abständen - für eine geringfügige erneute Aufweitung der Rammöffnung sorgen und damit auch bei weichem Erdreich ein unproblematisches Eindringen der Wärmetauscherelemente ermöglichen.

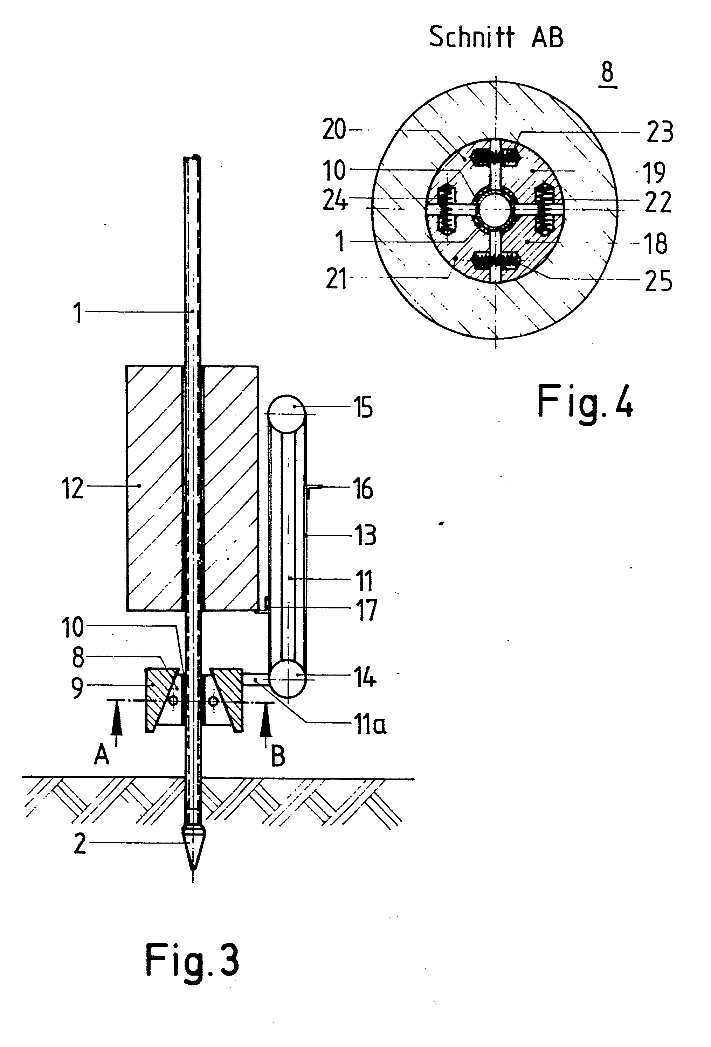

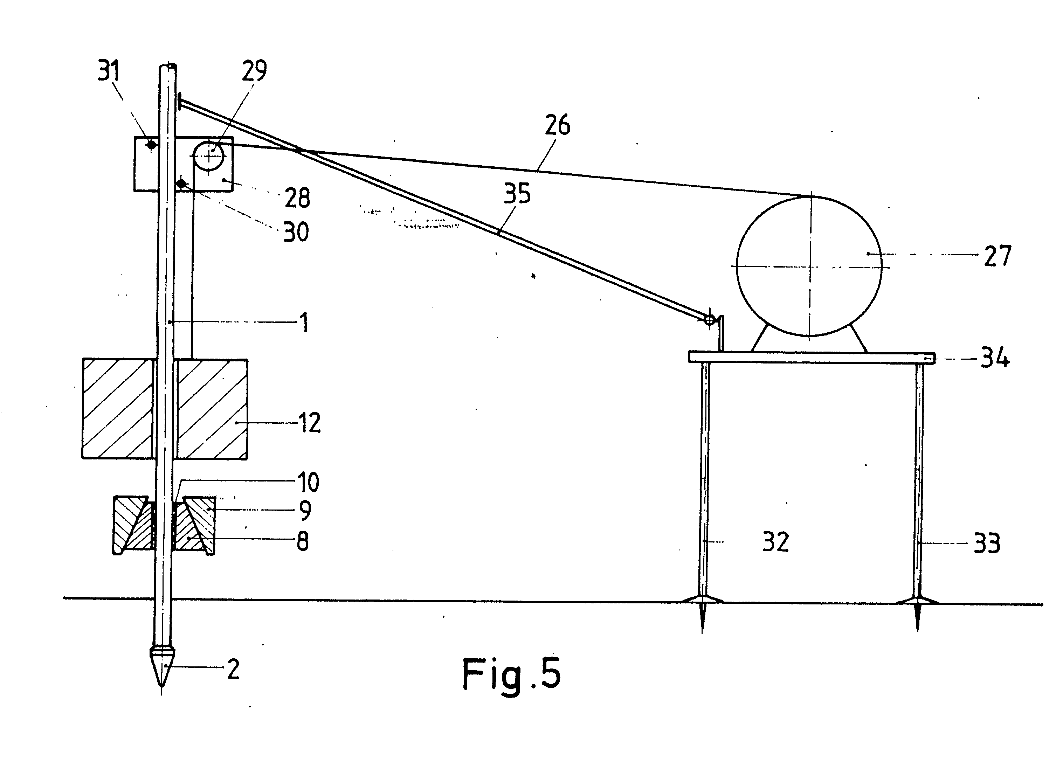

Das Aufbringen der die Verbindungsstellen umgebenden Schrumpfschläuche 7 wird bei Rammvorrichtungen wesentlich erleichtert, wie sie in den Figuren 3 und 5 dargestellt sind und im folgenden näher beschrieben werden sollen. Diese Rammvorrichtungen benötigen keine zusätzlichen Tragkonstruktionen für das Rammgewicht. Die aufeinanderfolgenden Rohrteilelemente können kontinuierlich verarbeitet werden, ohne daß es bei einem Zusammenfügen der Rohrteilelemente eines Abnehmens der Rammvorrichtung bedarf. So erfolgt auch das Verbinden der Rohrteilelemente direkt vor Ort, wobei die Abmessungen der Rammvorrichtung so gewählt sind, daß sie auch über den bereits aufgebrachten Schrumpfschlauch 7 geschoben werden können, der ebenfalls an Ort und Stelle zweckmäßigerweise bereits vor dem Verbinden auf das nachfolgende Rohrelement aufgeschoben ist und nach dem Positionieren lediglich durch eine geeignete Erwärmungsvorrichtung im Verbindungsbereich fixiert werden muß.

Die in Figur 3 dargestellte Rammvorrichtung wird auf das mit einer Spitze 2 versehene Außenrohr aufgesetzt und trägt ein einen Klemmkegel 8 und ein entsprechendes Gegenelement 9 mit kegelförmiger Ausnehmung aufweisendes Halteelement. Der Klemmkegel 8 ist - wie noch anhand von Figur 4 dargestellt werden wird - geteilt und weist in seinem Inneren, an dem Rohr 1 anliegenden Bereich eine Gummilage 10 auf. Das Gegenelement 9 liegt mit seiner kegelförmigen Ausnehmung auf dem Außenkegel des Elementes 8 auf und preßt diesen zusammen, so daß die Überleitung sowohl der Rammkräfte als auch der Tragkräfte für eine Aufzugsvorrichtung für ein Rammgewicht 12 möglich ist. Die Aufzugsvorrichtung 11 besteht aus einer Antriebskette mit zwei Kettenrädern 14 und 15, die von einem nicht dargestellten Elektromotor in Umdrehung versetzt werden. An der Kette 13 sind Mitnehmer 16 und 17 für das Rammgewicht 12 vorgesehen, welche letzteres jeweils um einen festen Hub anheben, um es freizugeben, wenn der jeweils im Eingriff befindliche Mitnehmer die obere Umlenkrolle 15 passiert. Das herabfallende Rammgewicht 12 trifft auf die obere Fläche des Gegenstücks 9 auf, welches den vom Rammgewicht 12 aufgebrachten Impuls auf den Klemmkegel 8 und das Rohr 1 überträgt, das damit ein weiteres Stück in das Erdreich getrieben wird. Ein Befestigungselement 11a für die Aufzugsvorrichtung 11 weist eine schockabsorbierendes Element auf, welches die Rammstöße von den Lagern der Antriebsmittel fernhält.

In Figur 4 ist der bei der Anordnung gemäß Figur 3 verwendete Klemmkegel in der Ansicht von unten dargestellt. Er ist in vier viertelkreisförmige Elemente 18 bis 21 aufge-

/13

teilt, wobei an den Schnittstellen der Segmente jeweils Bohrungen vorgesehen sind, welche pro Schnittstelle je eine Schraubenfeder 22 bis 25 aufnehmen können. Die den Reibschluß mit dem in das Erdreich einzutreibenden Rohr des Wärmetauscherelementes sicherstellende Gummilage 10 ist ebenfalls in vier Segmente aufgeteilt. Die dargestellte Aufteilung bewirkt, daß einerseits durch die Wirkung der kegeligen Innenfläche des Gegenstücks 9 eine gleichmäßige Anpressung der Gummilage 10 an das Rohr 1 erreicht wird, diese Anordnung sich aber ohne besonderen Kraftaufwand selbstätig wieder löst, wenn die Rammvorrichtung zum weiteren Eintreiben des Rohrs 1 nach oben verschoben werden muß. Dabei ist der Innendurchmesser des geöffneten Klemmkegels 8 so bemessen, daß er ohne weiteres über den Außendurchmesser D' des Schrumpfschlauches 7 hinweggeführt werden kann.

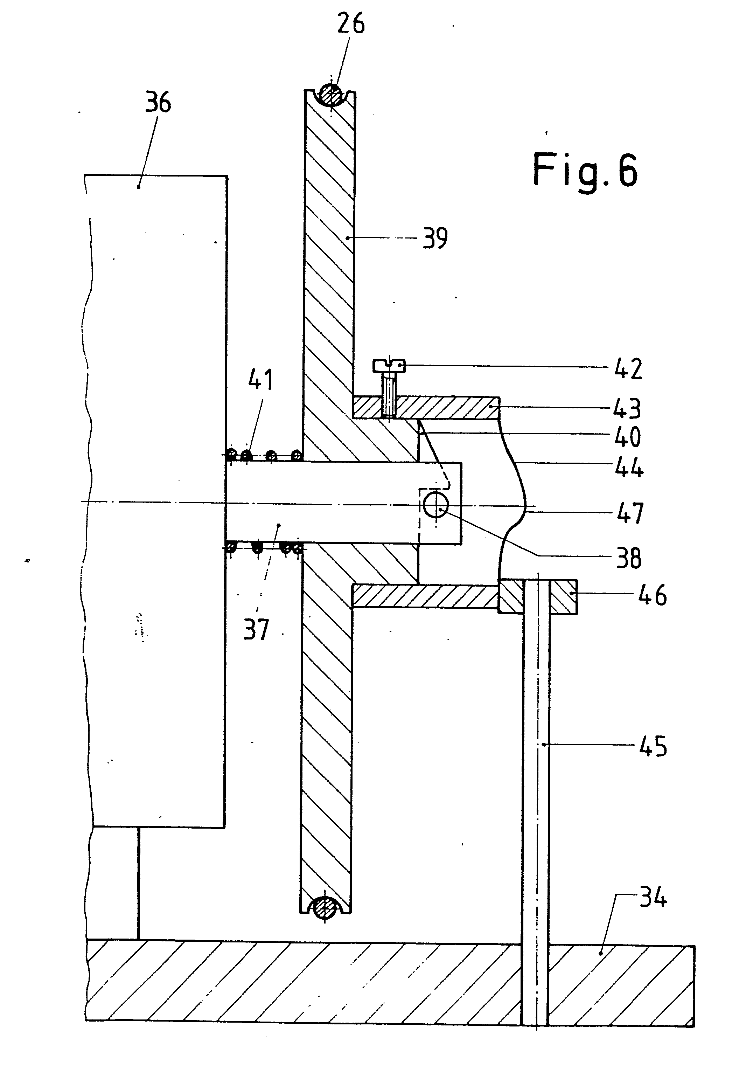

Bei der in Figur 5 dargestellten Ausführungsform einer Rammvorrichtung, handeltes sich ebenfalls um eine solche, die einfach zu handhaben und zu transportieren ist. Der in Figur 4 dargestellte Klemmkegel wird auch bei dieser Anordnung verwendet. Die entsprechenden Teile weisen daher Bezugszeichen auf, wie sie auch in Figur 3 benutzt werden. Das Rammgewicht 12' weist bei der hier dargestellten Ausführungsform jedoch ein Seil 26 auf, welches von einem mit einer Schnurscheibe versehenen Motor 27 angetrieben ist. Zur Umlenkung des Seils 26 ist eine am Rohr 1 anzubringende selbsthaltende Vorrichtung 28 mit einer Umlenkrolle 29 vorgesehen, welche schon durch ihr Eigengewicht mittels zweier Stifte 30 und 31, die ein Klemmoment erzeugen, in einer vorgegebenen Höhe in bezug auf das Element 1 festgehalten ist. Der Motor 27 ist auf einem mit Erdnägeln 32 und 33 versehenen Tisch 34 angeordnet, welcher über eine Distanzstange 35 von dem Wärmetauscherelement 1 in einem definierten Abstand gehalten wird, so daß die über das Seil 26 ausgeübte Zugkraft aufgenommen wird. Mittels des Antriebs 27 wird das Rammgewicht 12' jeweils um einen vorgegebenen Längenbetrag angehoben, bevor es durch Ausklinken der Schnurscheibe wieder freigegeben wird, um auf das Gegenstück 9 herabzufallen. Bemerkenswert ist dabei, daß, da die Umlenkvorrichtung 28 fest mit dem Rohr 1 verbunden ist und die Länge des Seils 26 zwischen der Seilscheibe des Antriebs 27 und der Umlenkrolle 29 im wesentlichen konstant ist, die Seilscheibe stets eine Umdrehung im selben Winkelbereich ausführt, ein Nachgeben des Seils 26 mit zunehmend in das Erdreich eindringendem Rohr 1 also nicht erforderlich ist. Hiermit ist auch eine wesentliche Vereinfachung des Antriebs der in Figur 6 separat dargestellt ist, gegenüber bekannten Anordnungen verbunden. Die Länge der Distanzstange wird bevorzugt so gewählt werden, daß sich die Fallhöhe des Rammgewichts im vorgesehenen Rammbereich nur unwesentlich ändert.

Ein Antriebsmotor 36 trägt am Ende eine Antriebswelle 37, einen Mitnehmerstift 38, der die Schnurscheibe 39 über eine Mitnehmernase 40 antreibt, solange der Stift 38 mit dieser in Eingriff ist. Die Schnurscheibe 39 ist auf der Antriebsachse des Motors frei verschieblich, wird aber durch eine Schraubenfeder 41 in der eingerückten Position gehalten. Die Schnurscheibe 39 ist mittels einer Stellschraube 42 mit einem Auslösering 43 verbunden, welcher eine Kurvenscheibe 44 trägt, die auf einer Achse 45 befestigten Druckrolle 46 abrollt. Gelangt nun eine im Verlauf der Steuerkurve 44 vorgesehene Erhebung 47 in den Bereich der Druckrolle 46, so wird die Schnurscheibe 39 gegen die Wirkung der Schraubenfeder 41 in Richtung auf den Antriebsmotor 36 verschoben und damit die Mitnehmernase 40 vom Stift 38 freigegeben. Durch die so erfolgte Auskupplung des Anstriebs kann das Rammgewicht frei herabfallen und einen Schlag auf das Gegenstück 9 ausüben. Da die Antriebsachse 37 des Motors (mit genügender Untersetzung) inszwischen weiterdreht und die Erhebung 47 der Steuerkurve 44 aus dem Bereich der Druckrolle 46 fortbewegt ist, kann der Mitnehmerstift 38 im Verlauf der nächsten Umdrehung der Achse 37, die Mitnehmernase 40 wieder mitnehmen, wodurch das Rammgewicht für einen erneuten Schlag angehoben wird.

Auch diese Variante der öffnungsgemäßen Rammvorrichtung ist leicht handhabbar, kann ohne Schwierigkeiten aufgestellt werden und auch bei der notwendigen Verbindung aufeinanderfolgender Elemente des Rohrs 1 ohne weiteres über die entstehenden Verbindungsstellen hinweggeführt werden.

Die in Figur 6 dargestellte Meßanordnung ermöglicht eine einfache Ermittlung der Wirksamkeit eines in die Erde eingebrachten Erdwärmetauscherelementes und des erzielten Erdanschlusses. Nach dem Einrammen des Außenrohrs 51 wird die aus den übrigen, nachfolgend zu beschreibenden Elementen bestehende Meßanordnung zu Meßzwecken vorübergehend in das in die Erde eingebrachte Außenrohr eingefügt.

Die innere Meßanordnung weist ein zentrales, sich im wesentlichen über die gesamte Länge des Rohres 51 er-

S

streckendes und wirksames Heizelement 52 auf, das durch elastische Zentrierstücke 53 und 54 in einer Entfernung von der Rohrwandung gehalten wird, welche bei in das Rohrinnere eingefüllter Wärmetransportflüssigkeit eine direkte Beeinflussung der Rohrwandung im wesentlichen verhindert. Aus Sicherheitsgründen wird das elektrische Heizelement mit Niederspannung betrieben.

An den Zentrierstücken 53 und 54 sind in ihrem äußeren Bereich Temperaturfühler 55 bzw. 56 angebracht, die eine Aussage über die im Bereich der Rohrwandung vorhandene Temperatur ermöglichen. Die Zuführungsleitungen der Temperaturfühler 55 und 56 sind direkt mit dem Heizelement verbunden und werden durch eine Abschlußkappe 57, welche bevorzugt thermisch isolierend wirkt, hindurchgeführt. Die Temperaturfühler sind innerhalb des Wärmetauscherelementes soweit von dem Heizelement 52 soweit entfernt angeordnet, daß eine direkte Beeinflussung ausgeschlossen ist.

Eine Meßlatte 60, welche mit dem oberen Zentrierstück 54 verbunden ist und nach oben aus dem Außenrohr 51 des Wärmetauscherelements herausragt, ermöglicht bei einem verschiebbaren Zentrierstück eine Ermittlung des Ortes der Messung, so daß - wenn zur Verhinderung von Konvektion vorzugsweise der vorgesehene Meßbereich durch (nicht dargestellte) zusätzliche schottenartige Trennelemente vom übrigen Inneren des Wärmetauscherelementes abgetrennt ist - eine gezielte Ermittlung des Wärmeübergangs in Abhängigkeit von der Tiefe vorgenommen werden kann.

Bei dem erfindungsgemäßen Arbeitsverfahren zum Einrammen von rohrförmigen, zur Aufnahme eines Wärmetransportmediums dienenden, Wärmetauscherelementen einer Erdwärmegewinnungsvorrichtung in das Erdreich, unter Benutzung der vorstehend beschriebenen Meßanordnung wird wie folgt vorgegangen: Einrammen des Rohres eines Wärmetauscherelementes mit einer Spitze 2, deren Außendurchmesser (D) in ihrem hinteren Bereich vergrößert ist und den Außendurchmesser (d) der Wärmetauscherelemente 1 übertrifft, wobei das Übermaß des Durchmessers derart gewählt ist, daß sich das Rohr, so tief wie für die spätere Verwendung vorgesehen, mittels einer der vorstehend eintreiben läßt; Messung des Wärmeübergangs durch die Meßanordnung mittels der sich bei konstanter Leistungseinspeisung ergebenden Temperaturüberhöhung oder aufgrund der zur Aufrechterhaltung einer bestimmten Temperaturüberhöhung notwendigen Leistung, sowie Verkleinern des Verhältnisses des größeren Außendurchmessers (D) zu dem kleineren Außendurchmesser (d) der Spitze, bei nachfolgenden entsprechenden Rammvorgängen, falls sich nach einer Meßdauer von mehreren Stunden noch kein quasistationärer Wärmeübergang, mit einem vorgegebenen Mindestwärmeübergang zwischen Wärmetauscher und umgebenden Erdreich eingestellt hat. Vergleichszahlen für den mindestens zu erwartenden Wärmeübergang bei ausreichendem Erdschluß auch bei im übrigen ungünstigen Bedingungen lassen sich für einzelne Wärmetauschertypen dabei aufgrund empirisch aufzustellender Tabellen ermitteln. Auf diese Weise ist sichergestellt, daß das eingebrachte Wärmetauscherelement den für den späteren Betrieb notwendigen Erdanschluß erreicht hat, so daß bei weiteren Rammvorgängen, mit (wegen nicht unnötig großen Übermaßes der Rammspitze) größter ausnutzbarer Rammgeschwindigkeit, mit einer zufriedenstellenden Ergiebigkeit der eingebrachten Elemente gerechnet werden kann.

* * * * *

Patentansprüche

1. System zum vertikalen Einrammen von rohrförmigen, zur Aufnahme eines Wärmetransportmediums dienenden, Wärmetauscherelementen einer Erdwärmegewinnungsvorrichtung in das Erdreich, d a d u r c h   g e k e n n z e i c h n e t , daß die Wärmetauscherelemente (1) zum Einrammen in das Erdreich eine Spitze (2) aufweisen, deren Außendurchmesser (D) in ihrem hinteren Bereich vergrößert ist und den Außendurchmesser (d) der Wärmetauscherelemente (1) übertrifft, wobei das Übermaß des Durchmessers dem Relaxationsvermögen des jeweiligen Erdreichs derart angepaßt ist, daß der Erdanschluß wenige Stunden nach dem Rammvorgang erreicht wird.

2. System nach Anspruch 1, d a d u r c h   g e k e n n z e i c h n e t , daß die Spitze (2) in das rohrförmige Wärmetauscherelement (1) einsteck- oder einschraubbar ist.

3. System nach einem der vorangehenden Ansprüche, d a d u r c h   g e k e n n z e i c h n e t , daß das Übermaß im wesentlichen 10% des Durchmessers ausmacht.

4. System nach einem der vorangehenden Ansprüche, d a d u r c h   g e k e n n z e i c h n e t , daß der Durchmesser eines Wärmetauscherelements (1) im wesentlichen 25 mm beträgt.

/19

5. System nach einem der vorangehenden Ansprüche, d a - d u r c h g e k e n n z e i c h n e t , daß ein Verbindungselement für aufeinanderfolgende Wärmeaustauscherteilelemente (3, 4) eine Muffe (7) aufweist, deren Außendurchmesser (D') im wesentlichen gleich oder geringfügig kleiner als der vergrößerte Außendurchmesser (D) der Spitze (2) ist.

6. System nach einem der vorangehenden Ansprüche, d a - d u r c h g e k e n n z e i c h n e t , daß die Muffe (7) aus einem elastischen, eine Dichtung für das Wärmetransportmedium bildenden Werkstoff besteht.

7. System nach einem der vorangehenden Ansprüche, d a - d u r c h g e k e n n z e i c h n e t , daß die Muffe (7) als Außenmuffe ausgebildet ist und aus einem Werkstoff besteht, der bei Erwärmung eine Schrumpfung erfährt.

8. System nach einem der vorangehenden Ansprüche, d a - d u r c h g e k e n n z e i c h n e t , daß das Verbindungselement eine rohrförmige Innenmuffe (5) mit einem Flansch (6) aufweist, dessen Außendurchmesser im wesentlichen demjenigen des Wärmetauscherelements (1) entspricht, wobei die Stirnflächen des Flansches konisch mit in radialer Richtung zunehmender Flanschstärke ausgebildet sind.

9. System nach einem der vorangehenden Ansprüche, d a - d u r c h g e k e n n z e i c h n e t , daß eine Rammvorrichtung ein Rammgewicht (12, 12') aufweist, welches eine zentrale, auf den Außendurchmesser der Wärmetauscherelemente (1) abgestimmte durchgehende Ausnehmung aufweist und ein Klemmelement, welches aus einem inneren, sich nach oben verjüngenden, geteilten Kegel (8) besteht, auf den ein eine entsprechende kegelförmige Ausnehmung aufweisendes Gegenelement (9) derart aufsetzbar ist, daß die Oberkante des Gegenelementes vom herabfallenden Rammgewicht beaufschlagt und der Kegel zusammen- und gegen das Wärmetauscherelement (1) gepreßt wird.

10. System nach Anspruch 9, d a d u r c h g e k e n n - z e i c h n e t , daß das Wärmetauscherelement (1) die Führung für das Rammgewicht (12, 12') bildet.

11. System nach Anspruch 9, d a d u r c h g e k e n n - z e i c h n e t , daß mindestens eine Feder (22 bis 25) vorgesehen ist, welche eine die Teilungsbereiche (18 bis 21) trennende Kraft ausübt.

12. System nach Anspruch 9, d a d u r c h g e k e n n - z e i c h n e t , daß der Kegel (8) mit einem Elastomer (10) bedeckte Klemmflächen aufweist.

13. System nach Anspruch 9, d a d u r c h g e k e n n - z e i c h n e t , daß eine Antriebsvorrichtung mit einer Mitnehmervorrichtung vorgesehen ist, welche das Rammgewicht (12, 12') um gleichbleibende Höhendifferenzbeträge
anhebt und mit dem einzurammenden Wärmetauscherelement (1)
mitgeführt wird.

14. System nach Anspruch 13, d a d u r c h g e k e n n -
z e i c h n e t , daß die Mitnahmevorrichtung aus einem
in aufsteigender Richtung parallel zu der Richtung des
einzurammenden Wärmetauscherelementes (1) umlaufenden
bandförmigen Antriebselements (13) besteht, das mindestens
einen Mitnehmer (16, 17) für das Rammgewicht (12) aufweist, welcher beim Passieren einer Umlenkrolle (15) das
Rammgewicht selbsttätig freigibt.

15. System nach Anspruch 13, d a d u r c h g e k e n n -
z e i c h n e t , daß die Mitnahmevorrichtung für das
Rammgewicht (12) aus einem Seil (26) und einer Seilscheibe
(39) besteht, wobei die Seilscheibe oder eine Umlenkrolle
(29) für das Seil mit dem einzurammenden Wärmetauscherelement (1) mitgeführt und die Seilscheibe nach jedem
Rammschlag um einen vorgegebenen festen Drehwinkelbereich
angetrieben wird.

16. System nach einem der vorangehenden Ansprüche, g e -
k e n n z e i c h n e t d u r c h eine Meßanordnung zum
Ermitteln des Wärmeübergangs zwischen Erdreich und Wärmetauscherelement, wobei eine in das Außenrohr (51) des
Wärmetauscherelementes einschiebbare in einem Abstand von

/22

dem Außenrohr geführte elektrische Heizvorrichtung (52), mindestens ein von der Heizvorrichtung thermisch getrennter Temperaturmeßfühler (55, 56) und eine Anzeige- oder Registriervorrichtung (59) für die Temperatur vorgesehen sind.

17. System nach Anspruch 16, d a d u r c h   g e - k e n n z e i c h n e t , daß eine Meß- und Anzeigevorrichtung (67) für die der Heizvorrichtung bei konstant gehaltener Temperatur zugeführte Leistung bzw. Energie vorgesehen ist.

18. Verfahren zum Einrammen von rohrförmigen, zur Aufnahme eines Wärmetransportmediums dienenden, Wärmetauscherelementen einer Erdwärmegewinnungsvorrichtung in das Erdreich, mittels eines Systems nach einem der Ansprüche 16 und 17, gekennzeichnet durch die folgenden Schritte:

a) Einrammen eines Rohres eines Wärmetauscherelementes mit einer Spitze (2), deren Außendurchmesser (D) in ihrem hinteren Bereich vergrößert ist und den Außendurchmesser (d) der Wärmetauscherelemente (1) übertrifft, wobei das Übermaß des Durchmessers derart gewählt ist, daß sich das Rohr, so tief wie für die spätere Verwendung vorgesehen, in das Erdreich eintreiben läßt,

b) Messung des Wärmeübergangs mittels der Meßanordnung sowie

c)    Verkleinern des Verhältnisses des größeren Außendurchmessers (D) zu dem kleineren Außendurchmesser (d) der Spitze, falls sich nach einer Meßdauer von mehreren, bevorzugt 24, Stunden sich kein Wärmeübergang einstellt, welcher sich bei einem gleichartigen Wärmetauscherelement bei  gutem Erdanschluß auch bei schlechten Bodenbedingungen mindestens einstellen sollte.

* * * * *

Fig.1    Fig.2

0046725

Schnitt AB

Fig. 4

Fig. 3

Fig. 5

26

36

Fig.6

39

42

43

40

44

41

47

38

37

46

45

34

0046725

Fig.7

# EUROPÄISCHER RECHERCHENBERICHT

Europäisches Patentamt

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| X | <u>BE - A - 879 592</u> (CARMINATI)<br><br>* Seite 6, Zeilen 24-29; Seite 7, Zeilen 1-4; Figur 4 * | 1,2 | F 24 J 3/02<br>E 02 D 5/72<br>5/52<br>7/08 |
| | <u>GB - A - 27 673 AD 1913</u> (RIDLEY)<br><br>* Seite 2, Zeilen 10-16; Figuren 1,2 * | 1-3 | |
| | <u>DE - C - 860 175</u> (HOLSCHER)<br><br>* Seite 2, Zeilen 26-32, 49-54; Figuren * | 1,2,5 | |
| | | | RECHERCHIERTE SACHGEBIETE (Int. Cl.³) |
| | <u>GB - A - 985 130</u> (BAITTINGER)<br><br>* Seite 2, Zeilen 67-74; 96-108; Seite 3, Zeilen 75-81; Figuren 6,11 * | 6 | F 24 J<br>E 02 D<br>E 04 H |
| | <u>GB - A - 1 002 741</u> (RUSCHE)<br><br>* Seite 5, Zeilen 1-9; Figur 6 * | 8 | |
| | <u>US - A - 2 629 985</u> (McDOWELL)<br><br>* Spalte 1, Zeilen 48-55; Spalte 2, Zeilen 1-14; Figuren 1-4 * | 10 | KATEGORIE DER GENANNTEN DOKUMENTE |
| | <u>FR - A - 2 376 255</u> (INSTITUT GOR-NOGO)<br><br>* Seite 6, Zeilen 2-13, 24-39; Seite 7, Zeilen 1-10; Figuren 1,2 *<br><div align="right">./.</div> | 9,10 | X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze<br>E: kollidierende Anmeldung<br>D: in der Anmeldung angeführtes Dokument<br>L: aus andern Gründen angeführtes Dokument |

Der vorliegende Recherchenbericht wurde für alle Patentansprüche erstellt.

&: Mitglied der gleichen Patentfamilie, übereinstimmendes Dokument

| Recherchenort | Abschlußdatum der Recherche | Prüfer |
|---|---|---|
| Den Haag | 17-11-1981 | RUYMBEKE |

EPA form 1503.1  06.78

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der Maßgeblichen Teile | betrifft Anspruch |
|---|---|---|
| | FR - A - 2 188 633 (CORDONNIER)<br><br>* Seite 2, Zeile 35; Seite 3, Zeilen 1-3, 29-35; Seite 4, Zeile 1; Figur 1 *<br><br>---- | 13,14 |

**KLASSIFIKATION DER ANMELDUNG** (Int. Cl.³)

**RECHERCHIERTE SACHGEBIETE** (Int. Cl.³)

EPA Form 1503.2  06.78